# EUROPEAN PATENT SPECIFICATION

(11) **EP 1 870 985 B1**
(45) Date of publication and mention of the grant of the patent: **06.01.2010**
(21) Application number: 06425422.0
(22) Date of filing: 20.06.2006
(51) Int. Cl.: H02K 7/102, B66D 5/02, B66D 5/08

(54) **An improved brushless motor with self braking features**
Ein verbesserter bürstenloser Motor mit selbstbremsenden Merkmalen
Moteur sans balais amélioré avec signes caractéristiques auto-freinants

(43) Date of publication of application: 26.12.2007
(73) Proprietor: Phase Motion Control S.r.l., 16141 Genova (IT)
(72) Inventor: Venturini, Marco, 16145 - Genova (GE) (IT)
(74) Representative: Monti, Umberto

(56) References cited:
- EP-A2- 0 878 430
- EP-A2- 1 043 261
- EP-A2- 1 298 084

## Description

The present invention relates to improved brushless motors and more particularly to a brushless motor provided with a self braking arrangement which is advantageously adapted to be used in direct drive elevators, although the invention is not to be limited to such applications.

Drive systems for elevators have traditionally comprised an electric motor, a braking device (or shortly a brake), a gearbox, usually of the worm gear type, to reduce the rotation speed of the motor, and a pulley over which the elevator cables are driven.

Usually the brake is an electrically actuated (released) brake that blocks the drive when it is not fed, and is further used to safely de-energize the motor when the elevator is at standstill at any floor level. Safety regulations normally require some level of redundancy in the brake.

Since the brake is repetitively actuated during the operation of the elevator, its working has to be pretty silent and the brake is only actuated when the motor is at standstill, except under emergency conditions.

Recently, a trend has developed towards using a direct drive in elevator systems with a permanent magnet brushless motor. Since this motor has to directly operate the pulley, it is larger and must provide a higher torque in respect of the motors used in conventional drives. As a consequence, also the brake must operate directly over the pulley shaft without the torque multiplication of a gearbox. This results in the brake size and cost becoming quite a significant fraction of the cost of the complete machine in direct drive systems. Moreover, a large size brake potentially produces a significant acoustical noise when operated, which is a disturbance in the application.

Another problem of direct drive elevators is related to the low inertia of the motor with respect to the load inertia. When the brake is de-energized, there is a short delay before the feedback loop of the drive energizes the motor in the right direction, which delay is perceived as a free fall situation by the user. Of course this is considered uncomfortable. To overcome this problem, a load cell is sometimes used in the elevator plant to measure the weight of the cabin and to energize the drive with the correct amount of torque before releasing the brake. Although such a device solves the above discussed problem, it charges an additional cost to the elevator system.

EP1 298 084 discloses a hoisting machine with a motor comprising a rotary frame, a stationary frame, a sheave integrally formed with the rotary frame and a brake wheel integrally formed with the rotary frame and larger than the sheave.

EP878430 relates to an electric motor for operating a lift and comprising a stator made of insulated lamination packets and a rotor with permanent magnets secured to the inside face and facing the stator coils.

EP1043261 discloses a circularly-recessed rotating member for an elevator traction machine with a brake surface formed on the interior circumferential surface of the rotating member.

Another object of the invention to provide a PM motor/brake arrangement in which the brake operation is generated by the same permanent magnets which are provided in the rotor for the conventional drive functions of the electric motor.

It is still another object of the invention to realize a motor/brake system which does not require a separate control coil for the brake operation, since the motor winding performs both functions of motor rotation and brake control without additional parts or connections. It is a still further object of the invention to realize a motor/brake system, in which the braking torque can be modulated or adjusted, thus leading to a silent release which cannot be accomplished by traditional spring loaded systems.

It is another object of the invention to provide a economic and simple way to measure brake torque before releasing it in order to preload the motor correctly when the brake is released.

The invention accomplishes the above objects through an improved brushless electric motor as claimed in claim 1. The invention further relates to a method for releasing the breaking action of the stator against the rotor in such a brushless electric motor as claimed in claim 7, as well as to an elevator system comprising such a brushless electric motor as claimed in claim 5.

Additional advantageous features are recited in the dependent claims.

An integral motor/brake assembly is realized, based on a permanent magnet AC motor, in which the magnetic attraction of the permanent magnets is used to cause a relative displacement between the rotor and the stator (or parts thereof) which engages the brake, and in which the magnetic attraction between the rotor and the stator is partially counterbalanced by mechanical means, and in which a vector controlled drive disengages the brake by feeding the motor with a three phase current system which is synchronized with the field of the rotor magnets (what is generally called a direct current in vector flux control theory) to lower the rotor magnetic attraction below the threshold of the said mechanically balanced (or countered) system.

The invention will now be disclosed with reference to the attached drawings illustrating preferred but non limiting embodiments of the invention, in which:
Fig. 1 is a schematic front view of a brushless motor according to the invention;
Figs. 1A and 1B illustrate two details of the motor shown in Fig. 1;
Fig. 2 is a perspective view of the motor of Fig. 1, with components partially cut away for better clarity; and
Fig. 3 is a longitudinal cross view of an elevator arrangement including a motor according to the invention connected to a drive device to realize a gearless machinery for an elevator system comprising a vector control AC drive.

Although the description that follows is referred to a standard cylindrical, inside rotor PM motor, the present invention is not limited to such embodiment; axial airgap motors, or cylindrical airgap motors with outer rotor and inside stator can also be realized according to the invention principle.

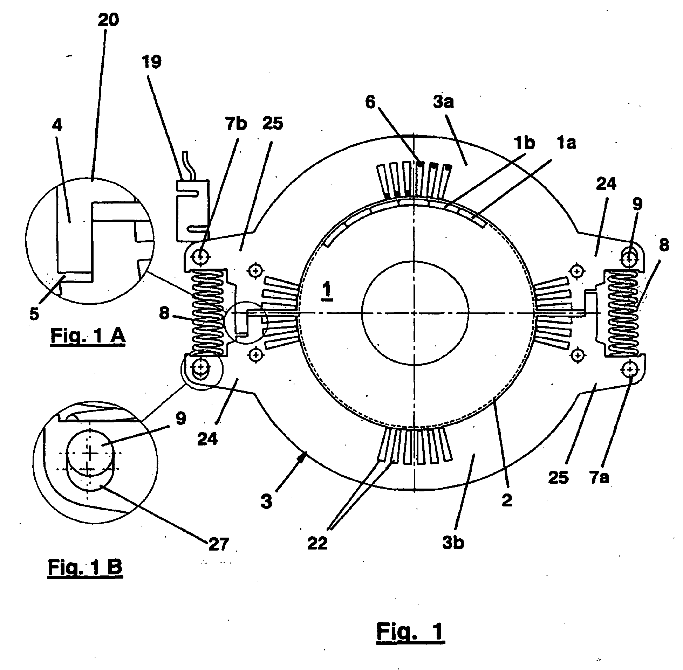

A brushless motor according to the invention is shown in Fig. 1 and comprises a stator 3 consisting of a stack of laminations 20 with a plurality of radial slots 22 and housing a rotor 1. The rotor member 1 carries an even number of permanent magnets 1 a, 1 b .. on its outer surface, with alternating polarity and generating a radial magnetization.

The magnets 1a, 1b .. may be covered by a retaining ring or shroud 2 both for protection and for fastening the magnets.

The stator 3 is made of two (or more) separate sections or half-stators 3a, 3b of ferromagnetic laminations 20 stacked together. Each half stator carries one half of a polyphase winding 6 which has the same number of electrical poles as the rotor magnets 1 a, 1b, ... The windings are connected in series so that a PM brushless motor is formed when the stator sections are positioned to form a cylinder.

The stator sections 3a, 3b are pivotally connected to the motor frame with pivots 7a,7b and the laminations 20 are shaped so as to form a complete cylindrical stator, when composed together.

The laminations 20 are formed with overlapping, dovetailing fingers 4 at each side so as to form a small circumferential clearance or gap 5 when the stator sections are assembled to form a cylinder. The overlapping fingers 4 provide for the free flow of the motor magnetic flux in spite of the circumferential clearance 5.

In the disclosed embodiment, the two stator halves are connected by means of projections 24, 25 which are pushed apart by helical springs 8. Projection 24 is connected to a frame not shown in Fig. 1, optionally through a load cell 19. Additional pivot shafts 9 are received in elongated slots 27 on the projections 24, so that the half stators are free to rotate about pins 7, and an expansion force is applied between the two half stators by the springs 8. The slots 27 which receive pins 9 create suitable end stops to limit the maximum clearance between the stator sections.

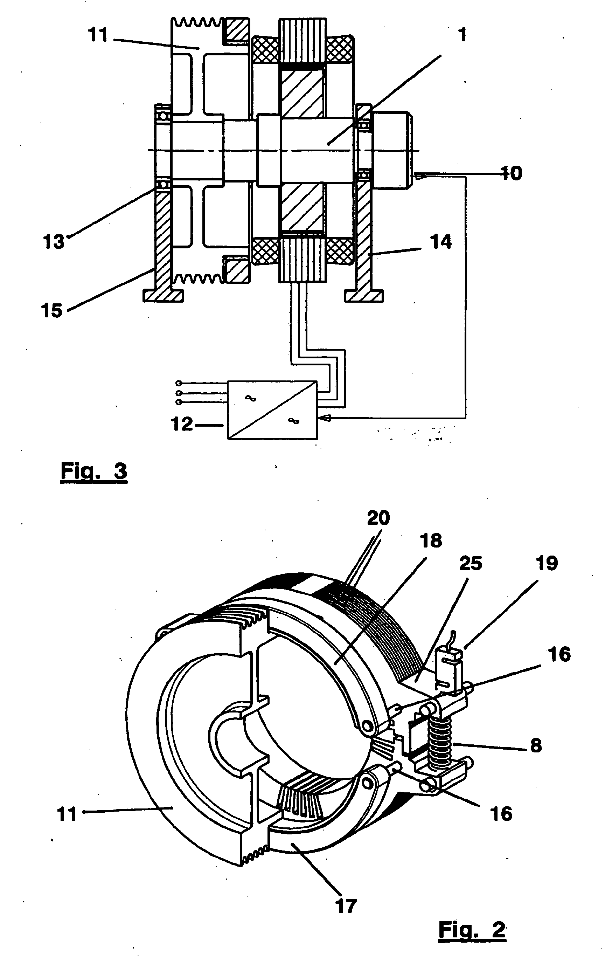

As shown in Fig. 3, when a brushless electric motor according to the invention is employed in a direct drive machinery for an elevator system, the arrangement comprises an encoder 10 and a pulley 11 fitted to the rotor shaft, a three phase drive system 12 adapted to accomplish a space vector control of the motor, and bearings 13 and end-bells 14,15 to provide the mechanical stability of the motor according to conventional motor technology.

The drive system 12 which comprises a vector control AC drive, feeds the motor with a three phase current system which is made to rotate in phase with the rotor by using the reading of the encoder 10. The drive system can control both the relative phase of the current system with respect to the magnetic field of the rotor, and its amplitude. This type of control is known as motor flux control. In order to understand the operation of motor flux control, generally the motor current vector is studied and controlled by decomposing it into two components, one of which (Id or direct current) is in phase with the rotor magnetic field and the other (Iq or quadrature current) is orthogonal to the rotor magnetic field.

In the control of permanent magnet synchronous (i.e. "brushless") motors, the amplitude of Iq is proportional to the output torque while Id does not affect motor torque and is generally controlled to a zero value by the drive. However, in accordance with the invention, the direct current Id adds an additional component to the rotor field the net effect of which is to partially counter the radial magnetic attraction between the rotor and the stator, without affecting the motor torque.

The Applicant feels that it would not be practical to make null the rotor magnetic attraction, but that a modulation coefficient of 30-40% can be achieved with an appropriate motor magnetic design.

The arrangement therefore operates as follows.

When the motor is not energized, i.e. no current is fed through the stator windings, the attraction forces of magnets 1 a, 1b collapse the stator sections onto the rotor (or the interposed shroud 2), thus preventing any rotation of the rotor shaft. The total magnetic attraction of a PM motor suitable for direct drive elevators is very high, typically in excess of that required for a proper braking action of the collapsed stator sections, so a fraction of the motor magnetic attraction is balanced by the spring system 8. The braking action can be obtained directly by collapsing the stator on the rotor if said rotor is suitably protected by a shroud 2.

However, in a preferred embodiment illustrated in Fig. 2, the stator sections 3a, 3b are connected by suitable means 16 to semicircular or arc-shaped brake pads 17, 18 and these latter operate on a brake drum (not shown) with a diameter larger than the rotor diameter thus accomplishing a greater brake torque. As an alternative, the brake pads 17, 18 can operate the pulley 11.

In order to release the braking stator sections a vector control of the motor stator is required. As pointed above, a standard brushless drive feeds the motor with a three phase current system, which generates a rotating current field. Such field is oriented by the drive with a fixed angle with reference to the rotor magnetic field, irrespective of rotating speed, by means of rotor position information collected by encoder 10.

The standard operation of a vector controlled drive in a permanent magnet motor provides for keeping the current ld equal to zero, since the field is generated by the magnets; while Iq is proportional to the motor torque and is controlled by the drive to adjust the torque generated by the motor, by means of the feedback controlled speed control loop.

In accordance to the invention, however, the current Id is controlled so as to reach a value different from zero, and precisely a value adapted to reduce the overall magnetic field in the airgap so as to lower the magnetic attraction between the rotor and the stator until such force becomes lower than the preload force of the springs 8 and the brake is released. In summary, the drive 12 controls Id to operate the brake and Iq to operate the motor, taking advantage of a degree of freedom in the drive which is normally not exploited in permanent magnet machines.

Since the attraction force of the magnets can be controlled in a progressive manner, both a slow release and a smooth clamp of the braking action can be achieved. In conventional spring loaded brakes the electromagnet which is used to release the brake has a force which increases steeply as the disk is released and this leads to an uncontrollable collapse of the disk on the electromagnet with consequent noise. Such drawback is avoided when using a motor-brake arrangement according to the invention.

Optionally a load cell 19 mounted on the brake pad pivot or the motor pivots can provide the drive with a direct sensing of the cabin weight.

Although the invention has been described with reference to a rotary motor in which the stator winding is a standard lap type winding, the invention is by no means limited to the disclosed embodiments as will be evident to the skilled of the art. For example, when the permanent magnet motor is of the type having an axial air gap, the rotor is a disk with magnets affixed on one face, and the rotor is axially mobile on the shaft and the rotor magnetic attraction to the stator is partially countered by axially resilient means.

Moreover the disclosed principle can be applied advantageously to a stator manufactured with individually cut cores, each carrying its own winding, assembled in two or more frames.

## Claims

1. A brushless electric motor comprising:
- a rotor (1) carrying an even number of permanent magnets (1 a, 1 b) on its surface, disposed with alternating polarity and providing a radial magnetization,
- a stator (3) consisting of a stack of laminations (20) with a plurality of radial slots (22), said motor being **characterised in that** said stator comprises at least two separate sections (3a, 3b), each carrying a number of serially connected polyphase windings (6), each stator section (3a) being pivotally connected (7a, 7b) to the frame of the motor and to an adjacent stator section (3b) allowing their displacement from a collapsed configuration preventing the rotation of said rotor (1) to an expanded configuration allowing for the rotation of said rotor (1), resilient means (8) being provided between adjacent stator sections for urging said adjacent sections towards said expanded configuration with a force lower than the collapsing force of the permanent magnets when said motor is energized.

2. A brushless electric motor as claimed in claim 1, in which the airgap between said rotor (1) and stator (3) is cylindrical, and said stator (3) is divided in two magnetically overlapping sections (3a, 3b), which are connected with arc-shaped brake pads (17, 18) adapted to engage a portion of said rotor (1).

3. A brushless electric motor as claimed in claim 1 further comprising a cable pulley (11) for an elevator.

4. A brushless electric motor as claimed in claims 2 or 3, in which said brake pads (17, 18) operate directly on said cable pulley (11).

5. An elevator system comprising a brushless electric motor as claimed in any of the preceding claims 1 to 4, a gearless machinery, and further comprising a vector control AC drive (12).

6. A system as claimed in claim 5, further comprising a load cell (19) in one of the motor supports (14, 15) for directly measuring the motor torque and consequently the weight of the elevator cabin.

7. A method for releasing the breaking action of the stator (3) against the rotor (1) in a brushless electric motor as claimed in claims 1 to 4, **characterized by** controlling the current component (Id) of the motor current vector which is in phase with the rotor magnetic field so as to reduce the total magnetic field in the airgap to counteract the magnetic attraction between said rotor (1) and stator (3) until the resulting force becomes smaller than that of said resilient means (8).

## Patentansprüche

1. Bürstenloser elektrischer Motor, umfassend:
- einen Rotor (1), der auf seiner Oberfläche eine gerade Anzahl von Permanentmagneten (1 a, 1 b) trägt, die mit alternierender Polarität angeordnet sind und eine radiale Magnetisierung bereitstellen,
- einen Stator (3), bestehend aus einem Stapel von Blechlamellen (20) mit einer Mehrzahl radialer Schlitze (22),
wobei der besagte Motor **dadurch gekennzeichnet ist, dass** der besagte Stator zumindest zwei separate Abschnitte (3a, 3b) umfasst, von denen jeder eine Anzahl seriell verbundener mehrphasiger Wicklungen (6) trägt,
wobei jeder Statorabschnitt (3a) mit dem Rahmen des Motors und mit einem angrenzenden Statorabschnitt (3b) drehbar verbunden (7a, 7b) ist und deren Lageänderung aus einer eingeklappten Konfiguration, in der die Drehung des besagten Rotors (1) verhindert ist, zu einer expandierten Konfiguration, in der die Drehung des besagten Rotors (1) möglich ist, erlaubt,
wobei Federmittel (8) zwischen angrenzenden Statorabschnitten vorgesehen sind, um die besagten angrenzenden Abschnitte in die besagte expandierte Konfiguration mit einer Kraft zu drängen, die niedriger ist als die einklappende Kraft der Permanentmagnete, wenn der besagte Motor aktiviert ist.

2. Bürstenloser elektrischer Motor wie in Anspruch 1 beansprucht, bei dem der Luftspalt zwischen dem besagten Rotor (1) und dem Stator (3) zylindrisch ist, und der besagte Stator (3) in zwei magnetisch überlappende Abschnitte (3a, 3b) geteilt ist, die mit bogenförmigen Bremskörpern (17, 18) verbunden sind, welche ausgelegt sind, um an einem Teil des besagten Rotors (1) anzugreifen.

3. Bürstenloser elektrischer Motor wie in Anspruch 1 beansprucht, weiter umfassend eine Seilrolle (11) für einen Aufzug.

4. Bürstenloser elektrischer Motor wie in Anspruch 2 oder 3 beansprucht, bei dem die besagten Bremskörper (17, 18) direkt auf die Seilrolle (11) wirken.

5. Aufzugssystem umfassend einen elektrischen Motor wie in einem der vorhergehenden Ansprüche 1 bis 4 beansprucht, eine getriebelose Maschinerie und weiter umfassend einen Vektorsteuerung-Wechselstromantrieb (12).

6. System wie in Anspruch 5 beansprucht, weiter umfassend eine Messdose (19) in einer der Motorstützen (14, 15) zum direkten Messen des MotorDrehmoments and damit des Gewichts der Aufzugskabine.

7. Verfahren zum Auslösen der bremsenden Wirkung des Stators (3) gegen den Rotor (1) in einem bürstenlosen elektrischen Motor wie in den Ansprüchen 1 bis 4 beansprucht, **gekennzeichnet durch** das Steuern der Stromkomponente (Id) des Motor-Stromvektors, der sich in Phase mit dem magnetischen Feld des Rotors befindet, um so das gesamte magnetische Feld in dem Luftspalt zu reduzieren, um der magnetischen Anziehung zwischen dem besagten Rotor (1) und dem besagten Stator (3) entgegenzuwirken, bis die resultierende Kraft kleiner wird als die der Federmittel (8).

## Revendications

1. Moteur électrique sans balai comprenant :
- un rotor (1) portant un nombre pair d'aimants permanents (1a, 1b) sur sa surface, disposés avec des polarités en alternance et assurant une magnétisation radiale,
- un stator (3) se composant d'une pile de stratifications (20) avec une pluralité de fentes radiales (22),
ledit moteur étant **caractérisé en ce que** ledit stator comprend au moins deux parties distinctes (3a, 3b), chacune portant un nombre de bobinages polyphasés connectés en série (6), chaque partie de stator (3a) étant connectée de manière pivotante (7a, 7b) au châssis du moteur et à une partie de stator adjacente (3b) permettant leur déplacement d'une configuration affaissée empêchant la rotation dudit rotor (1) à une configuration étendue permettant la rotation dudit rotor (1), un moyen élastique (8) étant fourni entre des parties de stator adjacentes pour amener lesdites parties adjacentes vers ladite configuration étendue avec une force inférieure à la force d'affaissement des aimants permanents lorsque ledit moteur est sous tension.

2. Moteur électrique sans balai selon la revendication 1, dans lequel l'espacement d'air entre ledit rotor (1) et ledit stator (3) est cylindrique, et ledit stator (3) est divisé en deux parties se chevauchant magnétiquement (3a, 3b), qui sont connectées avec des plaquettes de freins arquées (17, 18) aptes à se mettre en prise avec une partie dudit rotor (1).

3. Moteur électrique sans balai selon la revendication 1, comprenant en outre une poulie de câble (11) pour un ascenseur.

4. Moteur électrique sans balai selon la revendication 2 ou 3, dans lequel lesdites plaquettes de freins (17, 18) fonctionnent directement sur ladite poulie de câble (11).

5. Système d'ascenseur comprenant un moteur électrique sans balai selon l'une quelconque des revendications 1 à 4, une machinerie sans engrenage, et comprenant en outre un entraînement de courant alternatif à commande vectorielle (12).

6. Système selon la revendication 5, comprenant en outre une cellule de charge (19) dans l'un des supports de moteur (14, 15) pour mesurer directement le couple de moteur et par conséquent le poids de la cabine d'ascenseur.

7. Procédé pour libérer l'action de freinage du stator (3) contre le rotor (1) dans un moteur électrique sans balai selon l'une quelconque des revendications 1 à 4, **caractérisé par** la régulation du composant d'intensité (Id) du vecteur de courant de moteur qui est en phase avec le champ magnétique de rotor de manière à réduire le champ magnétique total dans l'espacement d'air pour neutraliser l'attraction magnétique entre ledit rotor (1) et ledit stator (3) jusqu'à ce que la force résultante devienne inférieure à celle dudit moyen élastique (8).
